# EUROPÄISCHE PATENTSCHRIFT

(11) **EP 2 437 171 B1**
(45) Veröffentlichungstag und Bekanntmachung des Hinweises auf die Patenterteilung: **01.05.2013**
(21) Anmeldenummer: 10175994.2
(22) Anmeldetag: 09.09.2010
(51) Int. Cl.: G06F 11/14, G06F 1/30

(54) **Datenspeichersystem und Verfahren**
Data storage system and method
Système de stockage de données et procédé

(43) Veröffentlichungstag der Anmeldung: 04.04.2012
(73) Patentinhaber: Siemens Aktiengesellschaft, 80333 München (DE)
(72) Erfinder: Gramolla, Tobias, 92245, Kümmersbruck (DE); Meier, Patrick, 90518, Altdorf b. Nürnberg (DE)

(56) Entgegenhaltungen:
- WO-A1-2010/077787
- US-A1- 2009 031 098
- US-A1- 2009 077 312
- US-A1- 2009 216 939
- US-A1- 2010 146 333

## Beschreibung

Die Erfindung betrifft ein Datenspeichersystem zum Anschluss an ein Datenverarbeitungssystem, umfassend einen programmierbaren Logikbaustein, einen flüchtigen Speicher, einen nichtflüchtigen Speicher, einen Energiespeicher, wobei der Energiespeicher ausgestaltet ist, die Energieversorgung nach einem Ausfall der Stromversorgung für das Datenverarbeitungssystem für eine erste Zeitdauer aufrechtzuhalten, um Daten einer ersten Datenart von dem flüchtigen Speicher in den nichtflüchtigen Speicher zu schreiben.

Des Weiteren betrifft die Erfindung ein Verfahren zum Speichern von Daten nach einem Ausfall einer Stromversorgung für ein Datenverarbeitungssystem.

Beispielsweise in Industriesteuerungen, wie speicherprogrammierbare Steuerungen, Automatisierungsrechner und/oder Prozessorsysteme fallen Daten an, die in einem Netz-Ausfall, welches bedeutet, dass eine Versorgungsspannung zum Betrieb einer Industriesteuerung oder allgemein eines Datenverarbeitungssystems ausfällt, damit müssen einige dieser Daten abgespeichert werden. Dies umfasst z.B. CMOS-Daten, Uhrzeit, Anlageninformationen, Diagnoseinformationen, Projektierungsinformationen, Zählerstände usw.. Diese nach einem Spannungsausfall gesicherten Daten sind nötig, um ein definiertes Neuanlaufen eines Datenverarbeitungssystems nach Spannungswiederkehr zu erreichen.

Um einen Datenverlust nach einem Stromausfall zu vermeiden, sind bisher allgemein drei Ansätze bekannt: Zum einen wird eine Batteriepufferung eines Rambausteins eingesetzt. Diese Lösung hat sich aber als zu teuer und nicht wartungsfrei, temperaturkritisch und auf eine eingeschränkte Datenmenge begrenzt, erwiesen. Auch können Unterbrechungsfreie-Stromversorgungen eingesetzt werden, welche kurz USV genannt werden, diese USV erlauben ein definiertes Herunterfahren des Datenverarbeitungssystems nach einem Spannungsausfall. Von Nachteil bei den Unterbrechungsfreien-Stromversorgungen ist es allerdings, dass diese sehr kostenintensiv sind und eine zusätzliche platzeinnehmende Hardware benötigen. Bei einer auch bekannten Kondensatorpufferung wird das komplette Datenverarbeitungssystem mit Energie aus dieser Kondensatorpufferung nach einem Spannungsausfall versorgt. Dafür sind in der Regel sehr große und hochwertige Kondensatoren, wie z.B. Goldcaps oder Elektrolytkondensatoren, nötig. Um das Datenverarbeitungssystem für eine gewisse Zeit am Leben zu halten und um die Daten wegzuschreiben, müssen also eine große Anzahl dieser hochqualitativen und hochkapazitiven Goldcaps eingesetzt werden, dies nimmt Platz ein und ist kostenintensiv.

Auch ist aus der US 2009/0077312 A1 ein Datenspeichersystem mit einer Festplatte, einem flüchtigen Speicherbaustein und einem nichtflüchtigen Speicherbaustein bekannt, bei diesem System werden nicht konsistente Daten in einem Speicherbaustein zwischengespeichert.

Es ist Aufgabe der vorliegenden Erfindung ein Datenspeichersystem gemäß Patentanspruch 1 bzw. ein Verfahren gemäß Patentanspruch 7 um Betrieb eines Datenspeichersystems anzugeben, bei welchem die für eine Überbrückungsenergieversorgung bereitstehenden Energiespeicher möglichst klein ausfallen.

Die Aufgabe wird für das erfindungsgemäße Datenspeichersystem nach den Merkmalen des Anspruchs 1 gelöst. Dabei umfasst das Datenspeichersystem zum Anschluss an ein Datenverarbeitungssystem einen Logikbaustein, einen flüchtigen Speicher, einen nichtflüchtigen Speicher, und einen Energiespeicher, wobei der Energiespeicher ausgestaltet ist die Energieversorgung nach einem Ausfall der Stromversorgung für das Datenverarbeitungssystem für eine erste Zeitdauer aufrechtzuerhalten um Daten einer ersten Datenart von dem flüchtigen Speicher in den nichtflüchtigen Speicher zu schreiben, dabei ist der Logikbaustein an ein Bussystem angeschlossen und das Bussystem dazu ausgestaltet, die erste Datenart und eine zweite Datenart von einem Prozessor des Datenverarbeitungssystems abzufragen, weiterhin ist der Logikbaustein dazu ausgestaltet, eine Auswahl der Daten der ersten Datenart und anschließendes Schreiben in den flüchtigen Speicher vorzunehmen, dabei ist der nichtflüchtige Speicher mit einen freien, bereits gelöschten Remanenzspeicherbereich versehen, in dem die Daten der ersten Datenart geschrieben werden, wobei der Logikbaustein weiterhin dazu ausgestaltet ist ein Signal, welches den Ausfall der Stromversorgung kennzeichnet, auszuwerten. Von Vorteil ist es, dass bei dem Datenspeichersystem zum Betrieb an einem Datenverarbeitungssystem bei einem Spannungsausfall die Daten schnell und effizient gespeichert werden können. Die Selektion von Daten einer ersten Datenart und von Daten einer zweiten Datenart beschleunigt diesen Speicherprozess, denn es wird bei den Datenspeichersystem bereits vorausschauend dafür gesorgt, dass sogenannte Remanenzdaten, welche für einen späteren Wiederanlauf eines Datenverarbeitungssystems notwendig sind, bereits im Vorfeld gefiltert werden und dann bei einem eintretenden Spannungsausfall ohne weitere Systemkomponenten des Datenverarbeitungssystems mit einer minimierten Speicherzeit in einen nichtflüchtigen Speicher, beispielsweise einen Flashspeicher, abgespeichert werden können. In den bisher bekannten Lösungen wurde das ganze Daten verarbeitungssystem gepuffert, deswegen war eine hohe Kapazität nötig. In der jetzigen Lösung werden vorzugsweise nur der Logikbaustein, der flüchtige Speicher und der nichtflüchtige Speicher für die Dauer des Kopierprozesses gepuffert.

In einer ersten Ausgestaltungsvariante des Systems ist das Bussystem als ein Prioritätskanal für die Daten der ersten Datenart ausgestaltet, wobei das Bussystem ein Mittel aufweist, welches dazu ausgestaltet ist, einen ersten Adressbereich von einem zweiten Adressbereich zu unterscheiden, und die Daten der ersten Datenart aus dem ersten Adressbereich priorisiert weiterzuleiten. Wird als Bussystem, beispielsweise ein PCIe-Bus verwendet, so kann ein dedizierter Adressbereich verwendet werden, welcher es ermöglicht Daten, die in den dedizierten Adressbereich geschrieben werden, von dem Logikbaustein bevorzugt zu behandeln. Dieser PCI-Bus ist ein PCI-Expressbus, dies ist ein Erweiterungsstandard zur Verbindung von Peripheriegeräten mit dem Chipsatz eines Hauptprozessors. Dieser PCI-Bus ermöglicht die Behandlung verschiedener Busadressregister, beispielsweise könnte ein Busadressregister "Null" einen Speicherbereich für "Standard-Daten" und ein Busadressregisterbereich "Eins" einen Speicherbereich für "remanente Daten" darstellen.

In einer zweiten Ausgestaltungsvariante des Datenspeichersystems ist das Bussystem als ein Prioritätskanal für die Daten der ersten Datenart ausgestaltet, wobei das Bussystem ein Protokollerweiterungsmittel aufweist, welches dazu ausgestaltet ist, ein Priorirätssignal zu erkennen und die Daten mit dem Prioritätssignal priorisiert weiterzuleiten. Diese Realisierung eines hochprioren Kanals ist über die Mechanismen, welche z.B. bei einen SATA-Bus oder USB-Bus genutzt werden, möglich. Über eine zu implementierende Protokollerweiterung wird die Priorisierung signalisiert, wobei der Logikbaustein anhand der Protokollerweiterung detektiert, ob es sich um Standard-Daten oder remanente Daten handelt und kopiert sie in die entsprechenden Bereiche des flüchtigen Speichers. Vorzugsweise wird der Entscheidungsalgorithmus bei der Protokollerweiterung nur die Daten der ersten Datenart in den flüchtigen Speicher kopieren, denn hier sollen die remanenten Daten, welche der Daten der ersten Datenart entsprechen, bereits für ein späteres schnelles Sichern in den nichtflüchtigen Speicher versammelt werden.

In einer weiter optimierten Ausgestaltung des Datenspeichersystems ist der Logikbaustein dazu ausgestaltet, die Daten der ersten Datenart aus dem flüchtigen Speicher in den nichtflüchtigen Speicher zu kopieren, wobei ein autark ablaufender Kopiervorgang im Logikbaustein implementiert ist, und der Kopiervorgang auf einen Energiefluss des Energiespeichers mit der ersten Zeitdauer abgestimmt ist. Diese automatisch startende Kopiervorgang, wobei "automatisch startend" bedeutet, dass dieser automatische Startvorgang von einem Signal ausgelöst wird, welches den Spannungsausfall kennzeichnet, sorgt dafür, dass die Daten von dem flüchtigen Speicher in den nichtflüchtigen Speicher kopiert werden. Als flüchtige Speicher und nichtflüchtige Speicher sind dem Fachmann auch die Begriffe Cache und Flash bekannt, es werden also die Daten von dem Cache in das Flash kopiert. Nach einem Einschreiben der Daten der ersten Datenart in den flüchtigen Speicher, beispielsweise einem RAM, werden die Daten automatisch und autark vom Logikbaustein umgespeichert in den nichtflüchtigen Speicher, also in den Flash. Von besonderem Vorteil ist es hier, dass keine weiteren Systemkomponenten des Datenverarbeitungssystems notwendig sind. Auf die Abhilfe der Komponenten wie z.B. X86-CPU, Chipset etc. kann verzichtet werden, diese können demnach abgeschaltet werden und benötigen keine Energieversorgung mehr.

Betrachtet man das Datenspeichersystem als eine modulare Einheit, welche an ein Datenverarbeitungssystem angedockt werden kann, so ist es von Vorteil, dass das Datenspeichersystem eine erste Anschlusseinrichtung aufweist, welche mit dem Energiespeicher in Verbindung steht und der Energiespeicher über diese erste Anschlussvorrichtung geladen wird.

Vorzugsweise weist das Datenspeichersystem eine zweite Anschlusseinrichtung auf, welche mit dem Bussystem in Verbindung steht und das Bussystem über diese mit einem weiteren Bussystem des Datenverarbeitungssystems koppelbar ist.

Bei einem Verfahren zum Speichern von Daten nach einem Ausfall einer Stromversorgung für ein Datenverarbeitungssystem, wird die eingangs genannte Aufgabe nach der Merkmalskombination des Anspruchs 7 gelöst.

Bei dem Verfahren zum Speichern von Daten nach einem Ausfall einer Stromversorgung für ein Datenverarbeitungssystem, wobei die Daten in einem Datenspeichersystem gespeichert werden, welches folgendes aufweist: Einen Logikbaustein, einen flüchtigen Speicher, einen nichtflüchtigen Speicher, einen Energiespeicher, wobei das Verfahren folgende Schritte umfasst: Vor dem Ausfall der Stromversorgung wird der Logikbaustein bereits derart an ein Bussystem betrieben, dass die Daten einer ersten Datenart und einer zweiten Datenart von einem Prozessor des Datenverarbeitungssystems abgefragt werden, wobei durch den Logikbaustein die Daten der ersten Datenart selektiert werden und anschließend die Daten dieser ersten Datenart in den flüchtigen Speicher geschrieben werden, ein nichtflüchtiger Speicher mit einem freien bereits gelöschtem Remanenzspeicherbereich wird bereitgehalten, der Ausfall der Stromversorgung wird von dem Logikbaustein überwacht, nach einem Ausfall der Stromversorgung für das Datenverarbeitungssystem wird über den Energiespeicher für eine erste Zeitdauer die Energieversorgung für das Datenspeichersystem aufrechtgehalten, die Daten der ersten Datenart werden während dieser Zeitdauer von dem flüchtigen Speicher in den Remanenzspeicherbereich des nichtflüchtigen Speichers geschrieben. Verfahrensgemäß ist es von besonderem Vorteil, dass die Daten der ersten Datenart, also Daten die später für das Wiederanlaufen eines Datenverarbeitungssystem notwendig sind, als Remanenzdaten betrachtet werden und zuvor während des Betriebs des Datenverarbeitungssystems bereits vorselektiert werden. Um die benötigte Zeit und damit die Größe einer vorzuhaltenden Energie zu minimieren, ist der letztendliche Zielspeicherbereich im nichtflüchtigen Speicher für die Remanenzdaten immer gelöscht.

In einer ersten Variante des Verfahrens werden die Daten der ersten Datenart und der zweiten Datenart derart abgefragt, dass sie anhand ihres Adressbereiches in einen ersten Adressbereich und einem zweiten Adressbereich unterschieden werden können, wobei die Daten der ersten Datenart, welche den ersten Adressbereich aufweisen, priorisiert über das Bussystem als ein Prioritätskanal weitergeleitet werden, wobei die Daten der ersten Datenart aus dem ersten Adressbereich als vorrangig eingeordnet und in den flüchtigen Speicher weitergeleitet werden. Der Logikbaustein erkennt dabei anhand des ausgewählten Adressbereiches bzw. eines Computerkommandos, ob es sich um eine zweite Datenart, beispielsweise Anwenderdaten (nicht remanent) oder um eine erste Datenart, beispielsweise remanente Daten handelt. Sobald sich diese remanenten Daten im flüchtigen Speicher befinden, beispielsweise einem RAM, kann der Rest eines Prozessorsystems aus dem Datenverarbeitungssystem abgeschaltet werden.

In einer anderen Ausgestaltungsvariante des Verfahrens oder in einer Kombination zu dem zuvor genannten Verfahrensschritt ist es von Vorteil, dass für das Bussystem ein erweitertes Protokoll genutzt wird, wobei ein Prioritätssignal den Daten der ersten Datenart zugeordnet wird, welches dazu genutzt wird, dass die Daten mit den Prioritätssignal vorrangig in den flüchtigen Speicher weitergeleitet werden. Auch hier ergibt sich ein ähnlicher Vorteil wie zu dem zuvor genannten Verfahrensschritt, der Logikbaustein erkennt in diesem Fall anhand des Prioritätssignals, ob es sich um Anwenderdaten (nicht remanent) oder um remanente Daten handelt. Sobald sich die remanenten Daten, aufgrund des Prioritätssignals, in dem nichtflüchtigen Speicher befinden, kann wiederum der Rest des Prozessorsystems des Datenverarbeitungssystems abgeschaltet werden. Der Kopiervorgang von dem flüchtigen Speicher in den nichtflüchtigen Speicher, beispielsweise einem Flash, geschieht sodann autark.

Für diesen autark durchzuführenden Kopievorgang ist es von besonderem Vorteil, dass der Logikbaustein derart betrieben wird, dass die Daten der ersten Datenart aus dem flüchtigen Speicher in den nichtflüchtigen Speicher kopiert werden, wobei dies als ein autark ablaufender Kopiervorgang im Logikbaustein implementiert ist und durchgeführt wird und dadurch der Kopiervorgang auf einen zeitlichen Energiefluss des Energiespeichers mit der ersten Zeitdauer abgestimmt wird. Die Zeitdauer für den Kopiervorgang kann klein gehalten werden, da die restlichen Komponenten des Datenverarbeitungssystems nicht mehr mit Energie versorgt werden müssen, so können auch die nötigen Energiespeicher wesentlich kleiner ausfallen, denn es muss weniger Energie zur Verfügung gestellt werden.

Vorzugsweise wird der Energiespeicher über eine Spannungsversorgungseinheit des Datenverarbeitungssystems geladen, dies sollte nach jeder Spannungswiederkehr eines Datenverarbeitungssystems durchgeführt werden um für den nächsten Spannungsausfall vorbereitet zu sein.

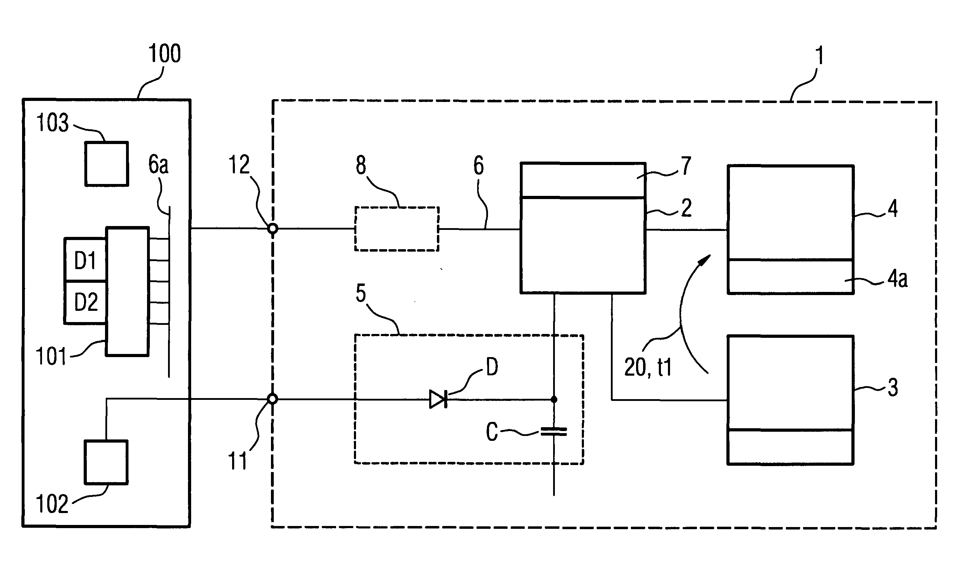

Ein Ausführungsbeispiel eines Datenspeichersystems in Verbindung mit einem Datenverarbeitungssystem ist in der Figur dargestellt.

Gemäß der Figur ist ein Datenverarbeitungssystem 1 über eine erste Anschlussstelle 11 und eine zweite Anschlussstelle 12 an ein Datenverarbeitungssystem 100 gekoppelt. Das Datenverarbeitungssystem 100 weist einen Prozessor 101, eine Spannungsversorgungseinheit 102 und einen Chipsatz 103 auf. Der Prozessor 101 verarbeitet Daten einer ersten Datenart D1 und Daten einer zweiten Datenart D2. Der Prozessor 101 ist mit einem dem Datenverarbeitungssystem 100 zugehörigen internen Bussystem 6a gekoppelt. Dieses interne Bussystem 6a ist wiederum über die zweite Anschlussstelle 12 mit dem Bussystem 6 des Datenspeichersystems 1 verbunden. Alle Daten die in dem Datenverarbeitungssystem 100 verarbeitet werden, können über das Bussystem 6 an einen Logikbaustein 2 weitergegeben werden. Dieser Logikbaustein 2 steht mit einem flüchtigen Speicher 3 und einem nichtflüchtigen Speicher 4 in datentechnischer Verbindung. Ein Energiespeicher 5 ist über die erste Anschlussstelle 11 mit dem Datenverarbeitungssystem 100 verbunden und kann sich über die Spannungsversorgungseinheit 102 des Datenverarbeitungssystems 100 mit Energie aufladen. Dabei umfasst der Energiespeicher 5 zur Energiespeicherung einen Kondensator C. Dieser Kondensator C wird über eine Diode D von der Spannungsversorgungseinheit 102 geladen. Die Diode D sorgt dafür, dass sich der Kondensator C nicht wieder über diesen Ladungsweg entlädt.

Ausgehend von dem Fall, dass die Stromversorgungseinheit 102 für das Datenverarbeitungssystem 100 noch vollständig intakt ist, wird bereits vor dem Ausfall der Stromversorgung der Logikbaustein 2 derart an dem Bussystem 6 betrieben, dass die Daten der ersten Datenart D1 vom Datenverarbeitungssystem 100 abgefragt werden. Der Logikbaustein 2 ist dahingehend ausgestaltet, dass die Daten der ersten Datenart D1 selektiert werden und anschließend die Daten dieser ersten Datenart D1 in den flüchtigen Speicher 3 geschrieben werden. Die Daten der ersten Datenart D1 stellen remanente Daten dar, wie z.B. CMOS-Daten, Uhrzeit-Daten, Anlageninformationen, Diagnoseinformationen, Projektierungsinformationen usw. dar. In Vorbereitung auf einen zu erwartenden Spannungsausfall ist in dem nichtflüchtigen Speicher 4 ein Remanenzspeicherbereich 4a angeordnet, welcher vorzugsweise permanent einen gelöschten Remanenzspeicherbereich 4a darstellt. Der permanent gelöschte Bereich hat den Vorteil, dass die benötigte Zeit und damit die Größe der vorzuhaltenden Energie des Energiespeichers 5 minimiert werden kann.

Nach einem Ausfall der Stromversorgung für das Datenverarbeitungssystem 100 wird über den Energiespeicher 5 für eine erste Zeitdauer t1 die Energieversorgung für das Datenspeichersystem 1 aufrecht gehalten. Die Daten der ersten Datenart D1 werden während dieser Zeitdauer von dem flüchtigen Speicher 3 in den Remanenzspeicherbereich 4a geschrieben.

In Vorbereitung auf einen zukünftigen Spannungsausfall des Datenverarbeitungssystems 100 werden also die Daten, insbesondere die remanenten Daten in dem flüchtigen Speicher 3 gesammelt. Dabei werden die Daten der ersten Datenart D1 und die Daten der zweiten Datenart D2 derart abgefragt, dass sie anhand ihres Adressbereiches in einem ersten Adressbereich und einem zweiten Adressbereich unterschieden werden können, wobei die Daten der ersten Datenart D1, welche den ersten Adressbereich aufweisen, priorisiert an das Bussystem 6 als ein Prioritätskanal weitergeleitet werden, wobei die Daten der ersten Datenart D1 aus dem ersten Adressbereich als vorrangig eingeordnet und in den flüchtigen Speicher 3 weitergeleitet werden.

Bei bisherigen Datenspeichersystemen nach dem Stand der Technik existieren nur Standard-Funktionalitäten. Diese Standard-Funktionalitäten werden nun um einen hochprioren Kanal für remanente Daten erweitert, werden Daten über diesen hochprioren Kanal geschrieben, werden diese vom Logikbaustein 2 bevorzugt behandelt und sofort in den flüchtigen Speicher 3, also einem Cache-Speicher/RAM geschrieben.

Um die Zeit für ein Wegschreiben der remanenten Daten möglichst klein zu halten, ist der automatisch startende Kopiervorgang, welcher in dem Logikbaustein 2 implementiert ist, von besonderen Vorteil auszunutzen. Nach einem Auffüllen der zu sichernden remanenten Daten in den flüchtigen Speicher 3 startet dieser Kopiervorgang bei einem eintretenden Spannungsausfall automatisch und kopiert die Daten (remanente Daten) von Cache in den Flash. Da für diesen Kopievorgang nun keine weiteren Systemkomponenten, wie z.B. ein X86-CPU oder ein Chipset des Datenverarbeitungssystems 100 notwendig sind, ist dieser Kopiervorgang auf eine kleine Zeitdauer beschränkt. Da das Kopieren nur noch eine kleine Zeitdauer beansprucht, kann auch die kapazitive Größe des Energiespeichers 5 kleiner ausfallen und somit wird seine Bauform auch kleiner. Es werden Kosten für ein Datenspeichersystem 100 eingespart und die Baugröße kann reduziert werden.

## Patentansprüche

1. Datenspeichersystem (1) zum Anschluss an ein Datenverarbeitungssystem (100), umfassend
einen Logikbaustein (2),
einen flüchtigen Speicher (3),
einen nichtflüchtigen Speicher (4),
einen Energiespeicher (5),
- wobei der Energiespeicher (5) ausgestaltet ist die Energieversorgung nach einem Ausfall der Stromversorgung für das Datenverarbeitungssystems (100) für eine erste Zeitdauer (t1) aufrecht zuhalten um die Daten von dem flüchtigen Speicher (3) in den nichtflüchtigen Speicher (4) zu schreiben,
- wobei der Logikbaustein (2) an ein Bussystem (6) angeschlossen ist und das Bussystem (6) dazu ausgestaltet ist die Daten von einem Prozessor (101) des Datenverarbeitungssystem (100) abzufragen,
**dadurch gekennzeichnet, dass**
- der Logikbaustein (2) ausgestaltet ist, aus den Daten, welche eine erste Datenart (D1) und eine zweite Datenart (D2) umfassen, die erste Datenart (D1) zu selektieren, wobei die Daten der ersten Datenart (D1) Daten bilden, die für ein späteres Wiederanlaufen des Datenverarbeitungssystems (100) notwendig sind, wobei der Logikbaustein (2) weiterhin ausgestaltet ist, die Daten der ersten Datenart (D1) anschließend in den flüchtigen Speicher (3) zu schreiben,
- wobei der nichtflüchtige Speicher (4) mit einem freien, bereits gelöschten Remanenzspeicherbereich (4a) versehen ist in den die Daten der ersten Datenart (D1) geschrieben werden,
- wobei der Logikbaustein (2) weiterhin dazu ausgestaltet ist ein Signal, welches den Ausfall der Stromversorgung kennzeichnet, auszuwerten, und wobei
- nach einem Ausfall der Stromversorgung für das Datenverarbeitungssystem (100) über den Energiespeicher (5) für eine erste Zeitdauer (t1) die Energieversorgung für das Datenspeichersystem (1) aufrecht gehalten wird, das Datenspeichersystem die Daten der ersten Datenart (D1) während dieser Zeitdauer (t1) von dem flüchtigen Speicher (3) in den Remanenzspeicherbereich (4a) des nichtflüchtigen Speichers (4) geschrieben werden.

2. Datenspeichersystem (1) nach Anspruch 1, wobei das Bussystem (6) als ein Prioritätskanal für die Daten der ersten Datenart (D1) ausgestaltet ist, wobei das Bussystem (6) ein Mittel (7) aufweist, welches dazu ausgestaltet ist, einen ersten Adressbereich von einem zweiten Adressbereich zu unterscheiden, und die Daten der ersten Datenart (D1) aus dem ersten Adressbereich priorisiert weiterzuleiten.

3. Datenspeichersystem (1) nach Anspruch 1, wobei das Bussystem (6) als ein Prioritätskanal für die Daten der ersten Datenart (D1) ausgestaltet ist, wobei das Bussystem (6) ein Protokollerweiterungsmittel (8) aufweist, welches dazu ausgestaltet ist, ein Prioritätssignal zu erkennen und die Daten mit dem Prioritätssignal priorisiert weiterzuleiten.

4. Datenspeichersystem (1) nach einem der Ansprüche 1 bis 3, wobei der Logikbaustein (2) dazu ausgestaltet ist, die Daten der ersten Datenart (D1) aus dem flüchtigen Speicher (3) in den nichtflüchtigen Speicher (4) zu kopieren, wobei ein autark ablaufender Kopiervorgangs (20) im Logikbaustein (2) implementiert ist, und der Kopiervorgang (20) auf einen Energiefluss des Energiespeichers (5) mit der ersten Zeitdauer (t1) abgestimmt ist.

5. Datenspeichersystem (1) nach einem der Ansprüche 1 bis 4, wobei eine erste Anschlusseinrichtung (11) mit dem Energiespeicher (5) in Verbindung steht und der Energiespeicher (5) über diese geladen wird.

6. Datenspeichersystem (1) nach einem der Ansprüche 1 bis 5, wobei eine zweite Anschlusseinrichtung (12) mit dem Bussystem (6) in Verbindung steht und das Bussystem (6) über diese mit einem weiteren Bussystem (6a) des Datenverarbeitungssystems (100) koppelbar ist.

7. Verfahren zum Speichern von Daten nach einem Ausfall einer Stromversorgung für ein Datenverarbeitungssystem (100), wobei die Daten in ein Datenspeichersystem (1) gespeichert werden, welches folgendes aufweist:
einen Logikbaustein (2),
einen flüchtigen Speicher (3),
einen nichtflüchtigen Speicher (4),
einen Energiespeicher (5),
wobei das Verfahren folgende Schritte umfasst:
- vor dem Ausfall der Stromversorgung wird der Logikbaustein (2) bereits derart an einem Bussystem (6) betrieben, dass die Daten von einem Prozessor (101) des Datenverarbeitungssystem (100) abgefragt werden,
**dadurch gekennzeichnet, dass** die Daten eine erste Datenart (D1) und ein zweite Datenart (D2) umfassen, wobei die Daten der ersten Datenart (D1), Daten bilden, die für ein späteres Wiederanlaufen des Datenverarbeitungssystems (100) notwendig sind,
- wobei durch den Logikbaustein (2) die Daten der ersten Datenart (D1) selektiert werden und anschließend die Daten dieser ersten Datenart (D1) in den flüchtigen Speicher (3) geschrieben werden,
- ein nichtflüchtiger Speicher (4) mit einem freien bereits gelöschtem Remanenzspeicherbereich (4a) bereitgehalten wird,
- der Ausfall der Stromversorgung von dem Logikbaustein (2) überwacht wird,

8. Verfahren nach Anspruch 7, wobei die Daten der ersten Datenart (D1) und der zweiten Datenart (D2) derart abgefragt werden, das sie anhand ihres Adressbereiches in einen ersten Adressbereich und einen zweiten Adressbereich unterschieden werden, wobei die Daten der ersten Datenart (D1), welche den ersten Adressbereich aufweisen, priorisiert über das Bussystem (6) als ein Prioritätskanal weitergeleitet werden, wobei die Daten der ersten Datenart (D1) aus dem ersten Adressbereich als vorrangig eingeordnet und in den flüchtigen Speicher (3) weitergeleitet werden.

9. Verfahren nach Anspruch 7, wobei für das Bussystem (6) ein erweitertes Protokoll genutzt wird, wobei ein Prioritätssignal den Daten der ersten Datenart (D1) zugeordnet wird, welches dazu genutzt wird, dass die Daten mit dem Prioritätssignal vorrangig in den flüchtigen Speicher (3) weitergeleitet werden.

10. Verfahren nach einem der Ansprüche 7 bis 9, wobei der Logikbaustein (2) derart betrieben wird, das die Daten der erste Datenart (D1) aus dem flüchtigen Speicher (3) in den nichtflüchtigen Speicher (4) kopiert werden, wobei dies als ein autark ablaufender Kopiervorgang (20) im Logikbaustein (2) implementiert ist und durchgeführt wird und dadurch der Kopiervorgang (20) auf einen zeitlichen Energiefluss des Energiespeichers (5) mit der ersten Zeitdauer (t1) abgestimmt wird.

11. Verfahren nach einem der Ansprüche 7 bis 10, wobei der Energiespeicher (5) über eine Spannungsversorgungseinheit (102) des Datenverarbeitungssystems (100) geladen wird.

## Claims

1. Data storage system (1) for connection to a data processing system (100), comprising
a logic chip (2),
a volatile memory (3),
a non-volatile memory (4),
an energy store (5),
- wherein the energy store (5) is embodied for maintaining the energy supply for the data processing system (100) for a first period of time (t1) after a power supply failure in order to write the data from the volatile memory (3) into the non-volatile memory (4),
- wherein the logic chip (2) is connected to a bus system (6) and the bus system (6) is embodied to request the data from a processor (101) of the data processing system (100),
**characterised in that**
- the logic chip (2) is embodied to select the first data type (D1) from the data which comprises a first data type (D1) and the second data type (D2),
wherein the data of the first data type (D1) forms data which is needed for a later restart of the data processing system (100), wherein the logic chip (2) is further embodied to subsequently write the data of the first data type (D1) into the volatile memory (3),
- wherein the non-volatile memory (4) is provided with a free, already erased remanence memory area (4a), into which the data of the first data type (D1) will be written,
- wherein the logic chip (2) is further embodied to evaluate a signal which characterizes the failure of the power supply, and wherein
- after a failure of the power supply for the data processing system (100), the energy supply for the data storage system (1) is maintained via the energy store (5) for a first period of time (t1),
the data of the first data type (D1) is written during this period of time (t1) from the volatile memory (3) into the remanence memory area (4a) of the non-volatile memory (4).

2. Data storage system (1) according to claim 1, wherein the bus system (6) is embodied as a priority channel for the data of the first data type (D1), wherein the bus system (6) has a means (7) which is embodied to differentiate between a first address area and a second address area, and to forward the data of the first data type (D1) prioritised from the first address area.

3. Data storage system (1) according to claim 1, wherein the bus system (6) is embodied as a priority channel for the data of the first data type (D1), wherein the bus system (6) has a protocol expansion means (8), which is embodied to detect a priority signal and to forward the data prioritised with the priority signal.

4. Data storage system (1) according to one of claims 1 to 3, wherein the logic chip (2) is embodied to copy the data of the first data type (D1) from the volatile memory (3) into the non-volatile memory (4), whereby a copying process (20) operating autonomously is implemented in the logic chip (2) and the copying process (20) is tailored to an energy flow of the energy store (5) with the first period of time (t1).

5. Data storage system (1) according to one of claims 1 to 4, wherein a first connection device (11) is connected to the energy store (5) and the energy store (5) is charged via this.

6. Data storage system (1) according to one of claims 1 to 5, wherein a second connection device (12) is connected to the bus system (6) and the bus system (6) is able to be coupled via this to a further bus system (6a) of the data processing system (100).

7. Method of storing data after a failure of a power supply for a data processing system (100), wherein
the data is stored in a data storage system (1) having the following elements:
a logic chip (2),
a volatile memory (3),
a non-volatile memory (4),
an energy store (5),
wherein the method comprises the following steps:
- before the failure of the power supply the logic chip (2) is already being operated on a bus system (6) such that the data is requested by a processor (101) of the data processing system (100),
**characterised in that**
the data comprises a first data type (D1) and a second data type (D2), wherein the data of the first data type (D1) forms data which is necessary for a later restart of the data processing system (100),
- wherein the data of the first data type (D1) is selected by the logic chip (2) and subsequently the data of this first data type (D1) is written into the volatile memory (3),
- a non-volatile memory (4) with a free already erased remanence memory area (4a) is provided,
- the failure of the power supply is monitored by the logic chip (2),
after a failure of the power supply for the data processing system (100), the energy supply for the data storage system (1) is maintained via the energy store (5) for a first period of time (t1),
the data of the first data type (D1) is written during this period of time (t1) from the volatile memory (3) into the remanence memory area (4a) of the non-volatile memory (4).

8. Method according to claim 7, wherein the data of the first data type (D1) and the second data type (D2) are interrogated such that they are divided on the basis of their address area into a first address area and the second address area, wherein the data of the first data type (D1), which has the first address area is forwarded prioritised by the bus system (6) as a priority channel, wherein the data of the first data type (D1) from the first data area is classified as prioritised and is forwarded into the volatile memory (3).

9. Method according to 7, wherein an expanded protocol is used for the bus system (6), wherein a priority signal is assigned to the data of the first data type (D1) which is used so that the data with the priority signal is forwarded prioritised into the volatile memory (3).

10. Method according to one of claims 7 to 9, wherein the logic chip (2) is operated such that the data of the first data type (D1) is copied from the volatile memory (3) into the non-volatile memory (4), wherein this is implemented and executed as an autonomously executing copying process (20) in the logic chip (2) and through this the copying process (20) is tailored to a timed energy flow of the energy store (5) with the first period of time (t1).

11. Method according to one of claims 7 to 10, wherein the energy store (5) is charged via a power supply unit (102) of the data processing system (100).

## Revendications

1. Système ( 1 ) de mémorisation de données à raccorder à un système ( 100 ) de traitement de données, comprenant un module ( 2 ) logique,
une mémoire ( 3 ) non rémanente,
une mémoire ( 4 ) rémanente,
un accumulateur ( 5 ) d'énergie,
- dans lequel l'accumulateur ( 5 ) d'énergie est conformé pour maintenir l'alimentation en énergie après une panne de l'alimentation en courant pour le système ( 100 ) de traitement de données pendant une première durée ( t1 ) et pour écrire les données de la mémoire ( 3 ) non rémanente dans la mémoire ( 4 ) rémanente,
- dans lequel le module ( 2 ) logique est raccordé à un système ( 6 ) de bus et le système ( 6 ) de bus est conformé pour consulter les données par un processeur ( 101 ) du système ( 100 ) de traitement de données,
**caractérisé en ce que**
- le module ( 2 ) logique est conformé pour sélectionner, dans les données qui comprennent un premier type ( D1 ) de données et un deuxième type ( D2 ) de données, le premier type ( D1 ) de données, les données du premier type ( D1 ) de données formant des données, qui sont nécessaires pour une remise en marche ultérieure du système ( 100 ) de traitement de données et le module ( 2 ) logique étant conformé en outre pour écrire les données du premier type ( D1 ) de données ensuite dans la mémoire ( 3 ) non rémanente,
- dans lequel la mémoire ( 4 ) rémanente est pourvue d'une zone ( 4a ) de mémoire rémanente libre déjà effacée, dans laquelle les données du premier type ( D1 ) de données sont écrites,
- dans lequel le module ( 2 ) logique est conformé en outre pour exploiter un signal qui caractérise la panne de l'alimentation en courant et dans lequel
- après une panne de l'alimentation en courant pour le système ( 100 ) de traitement de données, l'alimentation en énergie pour le système ( 1 ) de mémorisation de données est maintenue par l'accumulateur ( 5 ) d'énergie pendant une première durée ( t1 ), les données du premier type ( D1 ) de données sont écrites pendant cette durée ( t1 ) de la mémoire ( 3 ) non rémanente dans la zone ( 4a ) de mémoire rémanente de la mémoire ( 4 ) rémanente.

2. Système ( 1 ) de mémorisation de données suivant la revendication 1, dans lequel le système ( 6 ) de bus est sous la forme d'un canal de priorité pour les données du premier type ( D1 ) de données, le système ( 6 ) de bus ayant un moyen ( 7 ), qui est conformé pour distinguer une première zone d'adresse d'une deuxième zone d'adresse et pour acheminer de manière prioritaire les données du premier type ( D1 ) de données à partir de la première zone d'adresse.

3. Système ( 1 ) de mémorisation de données suivant la revendication 1, dans lequel le système ( 6 ) de bus est sous la forme d'un canal de priorité pour les données du premier type ( D1 ) de données, le système ( 6 ) de bus ayant un moyen ( 8 ) pour dresser un procès-verbal, qui est conformé pour reconnaître un signal de priorité et pour acheminer d'une manière prioritaire les données ayant le signal de priorité.

4. Système ( 1 ) de mémorisation de données suivant l'une des revendications 1 à 3, dans lequel le module ( 2 ) logique est conformé pour copier les données du premier type ( D1 ) de données de la mémoire ( 3 ) non rémanente dans la mémoire ( 4 ) rémanente, une opération ( 20 ) de copiage se déroulant de manière autonome étant mise en oeuvre dans le module ( 2 ) logique et l'opération ( 20 ) de copiage est adaptée a un flux d'énergie de l'accumulateur ( 5 ) d'énergie ayant la première durée ( t1 ).

5. Système ( 1 ) de mémorisation de données suivant l'une des revendications 1 à 4, dans lequel un premier dispositif ( 11 ) de connexion est en liaison avec l'accumulateur ( 5 ) d'énergie et l'accumulateur ( 5 ) d'énergie est chargé par celui-ci.

6. Système ( 1 ) de mémorisation de données suivant l'une des revendications 1 à 5, dans lequel un deuxième dispositif ( 12 ) de connexion est en liaison avec le système ( 6 ) de bus et le système ( 6 ) de bus peut être couplé par celui-ci à un autre système ( 6a ) de bus du système ( 100 ) de traitement de données.

7. Procédé de mémorisation de données après une panne d'une alimentation en courant pour un système ( 100 ) de traitement de données, dans lequel les données sont mémorisées dans un système ( 1 ) de mémorisation de données qui a ce qui suit :
un module ( 2 ) logique,
une mémoire ( 3 ) non rémanente,
une mémoire ( 4 ) rémanente,
un accumulateur ( 5 ) d'énergie,
dans lequel le procédé a les stades suivants :
- avant la panne de l'alimentation en courant, on fait fonctionner le module ( 2 ) logique déjà sur un système ( 6 ) de bus tel que les données sont consultées par un processeur ( 101 ) du système ( 100 ) de traitement de données,
**caractérisé en ce que**
les données comprennent un premier type ( D1 ) de données et un deuxième type ( D2 ) de données, les données du premier type ( D1 ) de données formant des données qui sont nécessaires pour une remise en route ultérieure du système ( 100 ) de traitement de données,
- dans lequel on sélectionne par le module ( 2 ) logique des données du premier type ( D1 ) de données et ensuite on écrit les données de ce premier type ( D1 ) de données dans la mémoire ( 3 ) non rémanente,
- on tient à disposition une mémoire ( 4 ) rémanente ayant une zone ( 4a ) de mémoire rémanente libre déjà effacée,
- on surveille la panne d'alimentation en courant par le module ( 2 ) logique,
- après une panne de l'alimentation en courant pour le système ( 100 ) de traitement de données, l'alimentation en énergie pour le système ( 1 ) de mémorisation de données est maintenue par l'accumulateur ( 5 ) d'énergie pendant une première durée ( t1 ), les données du premier type ( D1 ) de données sont écrites pendant cette durée ( t1 ) de la mémoire ( 3 ) non rémanente dans la zone ( 4a ) de mémoire rémanente de la mémoire ( 4 ) rémanente.

8. Procédé suivant la revendication 7, dans lequel on consulte les données du premier type ( D1 ) de données et du deuxième type ( D2 ) de données, de manière à les distinguer au moyen de leurs zones d'adresse en une première zone d'adresse et en une deuxième zone d'adresse, les données du premier type ( D1 ) de données qui ont la première zone d'adresse étant acheminées prioritairement par le système ( 6 ) de bus sous la forme d'un canal de priorité, les données du premier type
( D1 ) de données dans la première zone d'adresse étant classées comme prioritaire et étant acheminées dans la mémoire ( 3 ) non rémanente.

9. Procédé suivant la revendication 7, dans lequel on utilise pour le système ( 6 ) de bus un procès-verbal agrandi, un signal de priorité étant affecté aux données du premier type ( D1 ) de données, signal qui est utilisé pour acheminer les données ayant le signal de priorité prioritairement dans la mémoire ( 3 ) non rémanente.

10. Procédé suivant l'une des revendications 7 à 9, dans lequel on fait fonctionner le module ( 2 ) logique, de manière à copier les données du premier type ( D1 ) de données de la mémoire ( 3 ) non rémanente dans la mémoire ( 4 ) rémanente, cela étant effectué sous la forme d'une opération ( 20 ) de copiage se déroulant de manière autonome dans le module ( 2 ) logique et l'opération ( 20 ) de copiage étant ainsi adaptée à un flux d'énergie dans le temps de l'accumulateur ( 5 ) d'énergie ayant la première durée ( t1 ).

11. Procédé suivant l'une des revendications 7 à 10, dans lequel on charge l'accumulateur ( 5 ) d'énergie par une unité ( 102 ) d'alimentation en tension du système ( 100 ) de traitement de données.
